# EUROPEAN PATENT SPECIFICATION

(11) **EP 1 331 408 B1**
(45) Date of publication and mention of the grant of the patent: **26.04.2006**
(21) Application number: 03250457.3
(22) Date of filing: 24.01.2003
(51) Int. Cl.: F16B 25/10, F16B 23/00, F16B 35/04

(54) **Self-drilling screw for use in steel constructions**
Selbstbohrende Schraube für Anwendung in Stahlbau
Vis auto-perforante et utilisation dans la construction metallique

(30) Priority: 28.01.2002 JP 2002018232
(43) Date of publication of application: 30.07.2003
(73) Proprietor: YUGENKAISHA SHINJO SEISAKUSHO, Nishinariku, Osaka (JP)
(72) Inventor: Shinjo, Katsumi, Nishinari-ku, Osaka (JP)
(74) Representative: Price, Paul Anthony King

(56) References cited:
- EP-A- 0 447 902
- GB-A- 2 124 318
- US-A- 5 540 531
- US-A- 5 909 992

## Description

### FIELD OF THE INVENTION

The present invention relates to a self-drilling screw for use in steel houses, and more particularly relates to a self-drilling screw used to construct a steel frame employing C-beams, wherein these C-beams are zinc-plated steel plate articles having a relatively small thickness of about 1 *mm* and used in the so-called "two-by-four" system construction of houses.

### PRIOR ART

Raw steel beams are combined with each other to form such a steel frame, generally using the so-called self-drilling screws. The shapes and dimensions of self-drilling screws are prescribed in the "KC Standards" (viz., standards established by the Japanese Official Society "Kozai Club") in Japan.

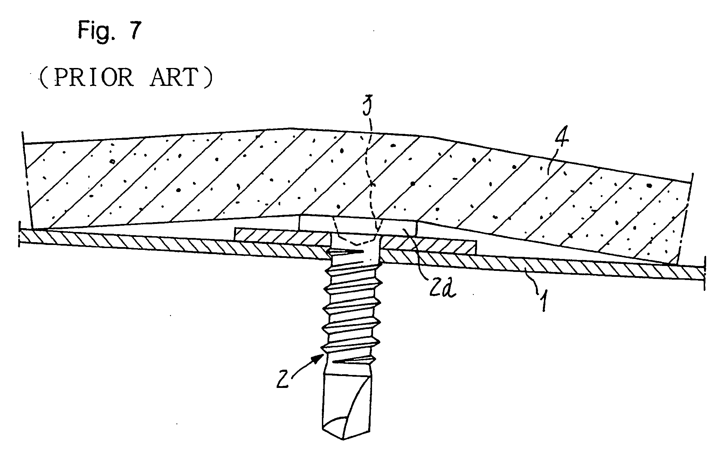

Exemplified in Fig. 7 is a steel frame 1 constructed using a flathead bolt 2 qualifying as a screw defined in the KC Standards. A plasterboard 4 as a material for finishing the interior of a house may be attached to this frame 1. A portion of this plasterboard will contact the head 2a of such a bolt 2, and this head is prone to produce a protuberance in the surface of plasterboard 4, thereby impairing appearance of the finished interior. In view of such an inconvenience, the KC Standards prescribe a self-drilling screw to have a flathead 2a as shown in the drawings. If this bolt 2 has a nominal diameter of 4.8 *mm*, then the thickness of its head has to fall within a range of 1.8 *mm* to 2.2 *mm.*

On the other hand, the item B1122 in the Japanese Industrial Standards (viz., "JIS") relates to a usual self-tapping screw with a head having formed therein a cruciform recess. If its head is 2.15 - 2.4 *mm* thick, then nominal diameter for its threaded leg is 2.9 *mm*. In contrast, the bolt has such a thin flathead (1.8 - 2.2 *mm* thick) by the KC Standards, and nevertheless has to drive its thick threaded leg of a diameter of 4.8 *mm*. Such a nominal leg diameter 4.8 *mm* is much greater than 2.9 *mm* by the JIS, as compared with its head so thin as equal to or much smaller than 2.15 - 2.4 *mm* (for the JIS's ordinary self-tapping screws each with a cruciform recessed head).

Correspondingly, a recess 3 formed in such a thin head 2a for engagement with a driver bit must be so shallow that the bit will be worn out or damaged soon, failing to tightly fasten the screw. If a motor-driven highspeed wrench or the like rotating at 2500 *rpm* or faster is used, then a very troublesome "carning-out" of its driver bit will probably happen.

EP-A-0,447,902 discloses a self-drilling screw having the features of the precharacterizing portion of claim 1.

US-A-5,540,531 discloses a panel fastener. US-A-5,909,992 discloses a self-tapping screw for fastening a metal corrugated board. GB-A-2,124,318 discloses a screw threaded fastener.

### SUMMARY OF THE INVENTION

According to the present invention, there is provided a self-drilling screw for use in steel houses comprising:
a shank with opposite end regions, one of the end regions of the shank being formed as a drilling portion, the other end region of the shank continuing to a flathead through a neck disposed close to the flathead;
a tapping thread formed in and around a first portion of the shank continuing from the drilling portion;
a guiding thread formed in and around a second portion continuing from the first portion; and
a recess formed in a top of the flathead and capable of engaging with a driving tool;
wherein the neck is formed as a thickened portion of the shank, and the recess is defined by and between torque-receiving walls extending substantially in parallel with an axis of the screw and beyond a boundary between the flathead and the neck;
characterized in that a fastening thread is formed in and around the neck and made larger in diameter than the tapping and guiding threads.

The present invention provides a self-drilling screw adapted for use in steel houses, having a recess in its head for engagement with a driver bit and designed such that the head withstands a torque strong enough for it to reliably tighten the screw, even if the head is made thinner than the conventional thickness as defined in the KC Standards.

The flathead may have a thickness of about 1.0 *mm*.

The recess formed in the flathead to engage with the driving tool may preferably be a square hole in accordance with the IFI Standards, or a special hole in accordance with the item No. 116-89 of the other Standards "JASOF".

Preferably, the fastening thread around the neck may be a tapered thread smoothly continuing to the guiding thread. However, it may be formed to assume a parallel configuration, with the tapping and guiding threads being tapered.

### BRIEF DESCRIPTION OF THE DRAWINGS

Fig. 1 is a front elevation of a self-drilling screw shown partly in cross section and provided in a first embodiment, with the screw being shaped for use in steel houses;
Fig. 2 is a plan view of a head of the screw shown in Fig. 1;
Fig. 3 is a front elevation of a self-drilling screw also shown partly in cross section but provided in a second embodiment;
Fig. 4 is a plan view of a head of the screw shown in Fig. 3;
Fig. 5 is a front elevation of a self-drilling screw likewise shown partly in cross section and provided in a third embodiment;
Fig. 6 is a plan view of a head of the screw shown in Fig. 5; and
Fig. 7 is a front elevation of the prior art flatheaded self-drilling screw used in a steel house frame and shown partly in cross section.

### THE PREFERRED EMBODIMENTS

Now some embodiments of the present invention will be described in detail, referring to the drawings.

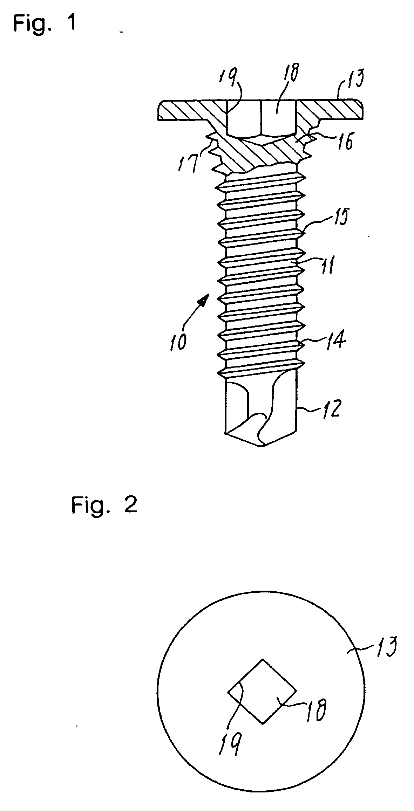

Figs. 1 and 2 show a self-drilling screw 10 adapted for use in steel houses and provided in a first embodiment of the present invention.

This self-drilling screw 10 has a shank or leg 11 with opposite ends, the one end being formed as a drilling portion 12. The other end is formed as a thinned flathead 13, so that a tapping thread 14 and a guiding thread 15 are formed around the leg 11. These threads extend between the flathead 13 and the drilling portion 12 so as to continue from the drilling portion 12. A neck 16 provided as a region of the leg 11 is made thicker in diameter than the remainder thereof and flared towards the flathead 13. A fastening thread 17 formed in and around the neck 16 continues from the guiding thread 15, but is made larger than it in diameter. On the other hand, a recess 18 formed in the flathead 13 for engagement with a driving tool is a square hole as defined in the IFI Standards. Four driven vanes or walls 19 defining this hole 18 extend substantially in parallel with the axis of this screw, so as to receive a tightening torque. Those walls extend beyond a boundary between the flathead and the neck, rendering the hole as said recess deep enough to transmit a considerably strong torque. Such a deep recess 18 will contribute to prevention of the caming-out problem, so that the driver bit transmitting such a strong torque will be pushed out of this recess. The thickened neck 16 formed in the leg 11 and disposed adjacent to the flathead will back up and reinforce the flathead 13, enabling it to make this head further thinned to about 1.0 *mm*.

An alternative and also preferable shape of the recess 18 is the so-called 'Torx' as defined in the item No. 116-89 of the JASOF Standards. However, any other proper recess may be employed, provided that it has vanes or walls in parallel with the screw axis and thus suited to transmission of strong torques.

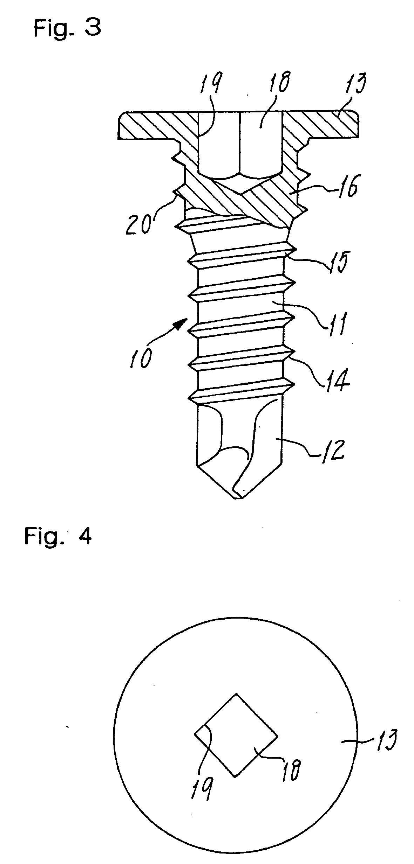

Figs. 3 and 4 show the self-drilling screw 10 in a second embodiment, wherein the neck 16 is elongated to assume a columnar shape thicker than the remainder of leg 11. A fastening thread 20 in this case continues from the guiding thread 15 and assumes a parallel thread configuration larger in diameter than the thread 15. The recess 18 formed in accordance with the IFI Standards in the head is the same square hole as that in the first embodiment.

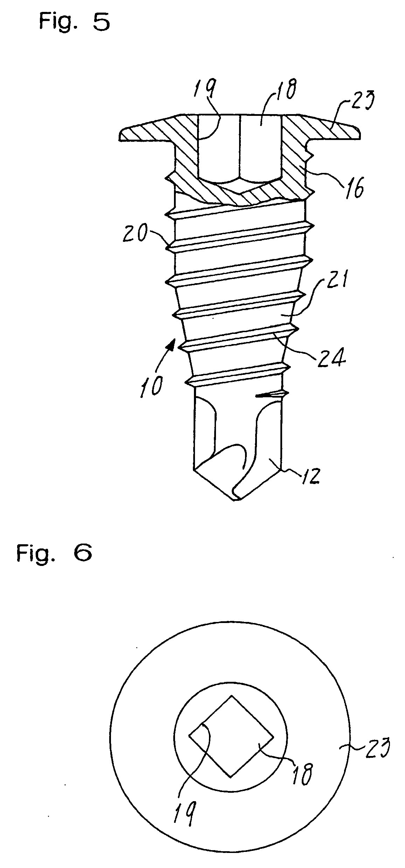

Figs. 5 and 6 show the self-drilling screw 10 in a third embodiment, wherein the flathead 23 has a top of a depressed frustoconical shape, and the leg 21 is tapered off towards the drilling portion 12. Thus, the tapping and guiding thread 24 formed around such a tapered leg 21, and the neck 16 is further elongated to assume a longer columnar shape also thicker than the remainder of leg 21. A fastening thread 20 continuing from the tapping and guiding thread 24 has a parallel configuration. The recess 18 formed in accordance with the IFI Standards in the head is the same square hole as in the first and second embodiments.

It will now be apparent that the threaded leg has a thickened neck that is disposed adjacent to the flathead and has a diameter larger than that of the remainder of said leg. The fastening thread formed around the thickened neck will cooperate with the driver bit-engaging recess formed deep into such a neck in such a manner that the screw can be tightened easily and reliably through a thin plate of steel frame, without any fear of the caming-out of the drill bit transmitting a strong torque. Further, such a thickened neck reinforces the flathead to be thinned to about 1.0 *mm*, thereby diminishing protuberance of the region of plaster board attached to the steel frame.

In summary, the thickened neck formed adjacent to such a thinned flathead makes it able to make the driver-engaging recess so deep as to afford capability of transmitting stronger torques, not only ensuring by virtue of the enlarged diameter of the fastening thread a firmer and more reliable tightening of the self-drilling screw into a steel plate.

## Claims

1. A self-drilling screw (10) for use in steel houses comprising:
a shank (11,21) with opposite end regions, one of the end regions of the shank being formed as a drilling portion (12), the other end region of the shank continuing to a flathead (13,23) through a neck (16) disposed close to the flathead (13,23);
a tapping thread (14,24) formed in and around a first portion of the shank continuing from the drilling portion (12);
a guiding thread (15,24) formed in and around a second portion continuing from the first portion; and
a recess (18) formed in a top of the flathead (13,23) and capable of engaging with a driving tool;
wherein the neck (16) is formed as a thickened portion of the shank (11,21), and the recess (18) is defined by and between torque-receiving walls (19) extending substantially in parallel with an axis of the screw (10) and beyond a boundary between the flathead (13,23) and the neck (16);
**characterized in that** a fastening thread (17,20) is formed in and around the neck (16) and made larger in diameter than the tapping and guiding threads (14,15,24).

2. A self-drilling screw as defined in claim 1, wherein the flathead (13,23) has a thickness of about 1.0 mm.

3. A self-drilling screw as defined in claim 1 or 2, wherein the recess (18) is selected from the group consisting of a square hole in accordance with the IFI Standards and a hole in accordance with the item No. 116-89 of the JASOF Standards.

4. A self-drilling screw as defined in claim 1, 2 or 3, wherein the fastening thread (17) continuing from the guiding thread (15) is of a tapered configuration as a whole.

5. A self-drilling screw as defined in claim 1, 2 or 3, wherein the fastening thread (20) continuing from the guiding thread (15,24) is of a parallel configuration as a whole.

6. A self-drilling screw as defined in claim 5, wherein the tapping and guiding threads (24) are tapered.

## Patentansprüche

1. Selbstbohrende Schraube (10) für die Anwendung in Stahlhäusern mit:
einem Schaft (11, 21) mit gegenüberliegenden Endbereichen, deren einer als Bohrabschnitt (12) gebildet ist, der andere Endbereich des Schaftes sich zu einem Flachkopf (13, 23) durch einen Hals (16) fortsetzt, der dicht an dem Flachkopf (13, 23) angeordnet ist;
einem Blechschraubengewinde (14, 24), welches in einem ersten Abschnitt des Schaftes unter Fortsetzen aus dem Bohrabschnitt (12) und um den Abschnitt herum gebildet ist;
einem Führungsgewinde (15, 24), welches in einem zweiten Abschnitt unter Fortsetzung aus dem ersten Abschnitt und um den zweiten Abschnitt herum gebildet ist; und
einer Ausnehmung (18), die an einer Oberseite des Flachkopfes (13, 23) gebildet und in der Lage ist, mit einem Vortriebswerkzeug in Eingriff zu gelangen;
wobei der Hals (16) als ein verdickter Abschnitt des Schaftes (11, 21) gebildet ist und der Abschnitt (18) durch und zwischen Drehmoment aufnehmende(n) Wände(n) (19) bestimmt ist, welche sich im wesentlichen parallel zu einer Achse der Schraube (10) und über eine Grenze zwischen dem Flachkopf (13, 23) und dem Hals (16) hinaus erstrecken;
**dadurch gekennzeichnet, daß** ein Befestigungsgewinde (17, 20) in dem Hals (16) und um diesen herum gebildet ist und mit einem größeren Durchmesser hergestellt ist als die Blechschrauben- und Führungsgewinde (14, 15, 24).

2. Selbstbohrende Schraube nach Anspruch 1, wobei der Flachkopf (13, 23) eine Dicke von etwa 1 mm hat.

3. Selbstbohrende Schraube nach Anspruch 1 oder 2, wobei die Ausnehmung (18) aus der Gruppe ausgewählt ist, die aus einem quadratischen Loch entsprechend den IFI-Normen und einem Loch entsprechend dem Teil Nr. 116-89 der JASOF-Normen besteht.

4. Selbstbohrende Schraube nach Anspruch 1, 2 oder 3, wobei das Befestigungsgewinde (17), welches sich von dem Führungsgewinde (15) fortsetzt, als Ganzes eine verjüngt zulaufende Konfiguration hat.

5. Selbstbohrende Schraube nach Anspruch 1, 2 oder 3, wobei das Befestigungsgewinde (20), welches sich von dem Führungsgewinde (15, 24) fortsetzt, als Ganzes eine parallele Konfiguration hat.

6. Selbstbohrende Schraube nach Anspruch 5, wobei das Blechschrauben- und das Führungsgewinde (24) verjüngt zulaufend sind.

## Revendications

1. Vis autoperforante (10) destinée à la construction d'habitations en acier, comprenant :
une tige (11, 21) comportant des zones d'extrémité opposées, l'une de ces zones d'extrémité de la tige étant configurée comme une partie perforante (12), l'autre zone d'extrémité de la tige se prolongeant en une tête plate (13, 23) via un collet (16) situé à proximité de la tête plate (13, 23) ;
un filet taraudeur (14, 24) formé dans une, et autour d'une, première partie de la tige dans le prolongement de la partie perforante (12) ;
un filet de guidage (15, 24) formé dans une, et autour d'une, seconde partie dans le prolongement de la première partie ; et
un creux (18) formé dans le haut de la tête plate (13, 23) et capable d'entrer en prise avec un outil d'entrainement ;
dans laquelle le collet (16) est configuré comme une partie épaissie de la tige (11, 21), et le creux (18) est défini par et entre des parois (19) recevant le couple qui se prolongent essentiellement parallèlement à un axe de la vis (10) et au-delà d'une limite existant entre la tête plate (13, 23) et le collet (16) ;
**caractérisée en ce qu'**un filet de fixation (17, 20) est formé dans le, et autour du, collet (16) et est configuré pour être plus grand en diamètre que les filets taraudeur et de guidage (14, 15, 24).

2. Vis autoperforante selon la revendication 1, dans laquelle la tête plate (13, 23) a une épaisseur d'environ 1,0 mm.

3. Vis autoperforante selon la revendication 1 ou 2, dans laquelle le creux (18) est choisi dans le groupe constitué par un trou carré conforme aux normes IFI et un trou conforme à l'article 116-89 des normes JASOF.

4. Vis autoperforante selon la revendication 1, 2 ou 3, dans laquelle le filet de fixation (17) dans le prolongement du filet de guidage (15) est globalement de configuration conique.

5. Vis autoperforante selon la revendication 1, 2 ou 3, dans laquelle le filet de fixation (20) dans le prolongement du filet de guidage (15, 24) est globalement de configuration parallèle.

6. Vis autoperforante selon la revendication 5, dans laquelle les filets taraudeur et de guidage (24) sont coniques.
